# EUROPÄISCHE PATENTSCHRIFT

(11) **EP 2 155 824 B1**
(45) Veröffentlichungstag und Bekanntmachung des Hinweises auf die Patenterteilung: **03.01.2018**
(21) Anmeldenummer: 08750354.6
(22) Anmeldetag: 20.05.2008
(51) Int. Cl.: C09B 67/00, C09C 1/56, C09C 3/10

(54) **PIGMENTPRÄPARATION, VERFAHREN ZU DEREN HERSTELLUNG UND VERWENDUNG**
PIGMENT PREPARATION, METHOD FOR PRODUCING THE SAME AND ITS USE
PRÉPARATION DE PIGMENTS ET SON PROCÉDÉ DE FABRICATION ET D'UTILISATION

(30) Priorität: 08.06.2007 DE 102007026551
(43) Veröffentlichungstag der Anmeldung: 24.02.2010
(73) Patentinhaber: Orion Engineered Carbons GmbH, 60528 Frankfurt am Main (DE)
(72) Erfinder: TAUBER, Gerd, 63500 Seligenstadt (DE); LÜDTKE, Stephan, 63457 Hanau (DE); MCINTOSH, Ralph, 63457 Hanau (DE); KALBITZ, Werner, 63517 Rodenbach (DE); ZIMMERMANN, Jutta, 63755 Alzenau (DE); KARL, Alfons, 63584 Gründau (DE); FRAHN, Stephanie, 63846 Laufach-frohnhofen (DE)
(74) Vertreter: f & e patent
(86) Internationale Anmeldenummer: PCT/EP2008/056194
(87) Internationale Veröffentlichungsnummer: WO 2008/148639

(56) Entgegenhaltungen:
- EP-A- 0 259 130
- WO-A-2004/046256
- WO-A-2005/017047
- WO-A-2006/061110
- WO-A-2007/039604
- DE-A1- 19 748 575
- DE-A1-102004 058 271
- FR-A- 1 233 251

## Beschreibung

Die Erfindung betrifft eine Pigmentpräparation, ein Verfahren zu deren Herstellung und deren Verwendung.

Pulverpigmente werden zum Einfärben von Thermoplasten eingesetzt. Vorteil der Pulverpigmente ist, daß sie nicht von einem Trägermaterial abhängig sind. Dieser Vorteil wird jedoch oft auf Kosten der Dispergierbarkeit erzielt.

Zur Verbesserung der Dispergierbarkeit werden die Pigmente mit Harz (DE 2540355) oder mit Polymeren belegt (US 3133893) .

Spezielle Trocknungsverfahren sind bekannt aus EP 0036520, wobei feinteilige Pigmente und eine Flüssigkeit, deren kritische Temperatur unterhalb der Zersetzungstemperatur des Pigments liegt, unter Druck auf Temperaturen oberhalb der kritischen Temperatur der Flüssigkeit erwärmt und dann entspannt wird, wobei die Temperatur stets oberhalb der Taulinie der Flüssigkeit gehalten wird.

Außerdem sind Pigmentpräparationen aus EP 0282855 bekannt, die ein organisches Pigment und/oder Ruß und ein Tensid aus der Reihe Alkylbenzolsulfonate oder spezielle Sulfobernstein-säureester enthalten, und die, gegebenenfalls nach Naßzerkleinerung, durch Sprüh- oder Gefriertrocknung aus wäßrigem Medium getrocknet werden.

Aus EP 1103173 sind Pigmentpräparationen für die Einfärbung von Saatgut bekannt, enthaltend ein Pigment und ein Polyetherpolyol.

Ferner sind aus US 2005090609 Pigmentgranulate bekannt mit einer mittleren Korngröße von 50-5000 um und einer BET-Oberfläche von <= 15m²/g, enthaltend unter anderem 10-40 Gew.-% mindestens eines nicht ionischen oberflächenaktiven Additivs auf der Basis von Polyethern.

Die bekannten Pigmentpräparationen haben den Nachteil, daß die Aufrührbarkeit schlecht ist. WO2005017047 offenbart eine Farbmittelzubereitung enthaltend a) mindestens ein Farbmittel in partikulärer Form, b) mindestens ein organisches Lösemittel mit einem Siedepunkt von mindestens 247°C, gemessen bei Atmosphärendruck und c) Wasser und weniger als 0,25 Gew.-% organische Lösungsmittel.

WO2004046256 offenbart eine wäßrige, kolloidale Gasrussdispersion zur Verwendung in Tinten, Tintenstrahltinten, Coatings sowie in Druckerschwärze.

Aufgabe der vorliegenden Erfindung ist es, eine Pigmentpräparation herzustellen, die eine gute Aufrührbarkeit ("stir in") in Wasser aufweist.

Gegenstand der Erfindung ist eine Pigmentpräparation, welche dadurch gekennzeichnet ist, dass diese mindestens ein Pigment und mindestens ein Verbindung der allgemeinen Formel I

CH₃-(CH₂)ₙ-CH₂-O-[(CH₂)ₚ-O]ₘ-H I

mit n=8-18, vorzugsweise n=10-18, besonders bevorzugt n=14-18, ganz besonders bevorzugt n=14-16, p=1-4, vorzugsweise p=2, und m=15-25, vorzugsweise m=18-23, besonders bevorzugt m=20-23, und die Restfeuchte 0,1 bis 20 Gew.-% enthält.

Als Pigmente können Ruße oder Buntpigmente eingesetzt werden.

Als Buntpigmente können beispielsweise Gelb-, Orange-, Rot-, Magenta-, Violett-, Blau-, Cyan-, Grün- oder Braunpigmente, verwendet werden. Vorzugsweise können als Buntpigmente anorganische Blaupigmente, beispielsweise Eisenblau, Ultramarinblau, Kobaltblau oder Mischphasenblaupigmente, oder organische Blaupigmente, beispielsweise Phthalocyaninblau oder Indanthrenblau, eingesetzt werden.

Als Ruß können Furnace-, Gas-, Flamm-, Acetylenruße, Sihaltige Ruße, bekannt aus WO 98/45361 oder DE 19613796, Inversionsruße, bekannt aus DE 19521565, und metallhaltige Ruße, bekannt aus WO 98/42778 verwendet werden. Als Ruß können bevorzugt Pigmentruße mit einem mittleren Primärteilchendurchmesser von 8 bis 80 nm, vorzugsweise 10 bis 35 nm, und einer DBP-Zahl von 40 bis 200 ml/100 g, vorzugsweise 60 bis 150 ml/100 g, eingesetzt werden.

Der Gasruß kann einen mittleren Primärteilchendurchmesser von 8 bis 30 nm, vorzugsweise 10 bis 25 nm, haben. Die Gasruße können einen pH-Wert von 2 bis 5, vorzugsweise 3,5 bis 4,5, haben.

Vorzugsweise kann die Verbindung der allgemeinen Formel I CH₃-(CH₂)ₙ-CH₂-O-[(CH₂)₂-O]ₘ-H, mit n=10, 12, 14, 16 und m=18-23, und die Restfeuchte 0,1 bis 20 Gew.-% sein. Beispielsweise können Verbindungen der allgemeinen Formel I CH₃-(CH₂)₁₀-CH₂-O-[(CH₂)₂-O]₁₈-H, CH₃-(CH₂)₁₂-CH₂-O-[(CH₂)₂-O]₁₈-H, CH₃-(CH₂)₁₄-CH₂-O-[(CH₂)₂-O]₁₈-H, CH₃-(CH₂)₁₆-CH₂-O-[(CH₂)₂-O]₁₈-H, CH₃-(CH₂)₁₀-CH₂-O-[(CH₂)₂-O]₂₀-H, CH₃-(CH₂)₁₂-CH₂-O-[(CH₂)₂-O]₂₀-H, CH₃-(CH₂)₁₄-CH₂-O-[(CH₂)₂-O]₂₀-H, CH₃-(CH₂)₁₆-CH₂-O-[(CH₂)₂-O]₂₀-H, CH₃-(CH₂)₁₀-CH₂-O-[(CH₂)₂-O]₂₃-H, CH₃-(CH₂)₁₂-CH₂-O-[(CH₂)₂-O]₂₃-H, CH₃-(CH₂)₁₄-CH₂-O-[(CH₂)₂-O]₂₃-H oder CH₃-(CH₂)₁₆-CH₂-O-[(CH₂)₂-O]₂₃-H sein.

Die Pigmentpräparation kann ein Biozid, pH-Regulierungsmittel, Feuchthaltemittel, Haftungsmittel, Entschäumer enthalten.

Die Pigmentpräparation kann eine gefällte und/oder pyrogene Kieselsäure enthalten.

Die Pigmentpräparation kann ein Dispergiermittel enthalten. Das Dispergiermittel kann ein nicht ionisches, ein kationisches, ein anionisches oder ein amphoteres Netzmittel sein. Die erfindungsgemäße Pigmentpräparation kann außer der Verbindung der allgemeinen Formel I dipergiermittelfrei sein.

Die Pigmentpräparation kann aus mindestens einem Pigment, mindestens eine Verbindung der allgemeinen Formel I

CH₃-(CH₂)ₙ-CH₂-O-[(CH₂)ₚ-O]ₘ-H I

mit n=8-18, vorzugsweise n=10-18, besonders bevorzugt n=14-18, ganz besonders bevorzugt n=14-16, p=1-4, vorzugsweise p=2, und m=15-25, vorzugsweise m=18-23, besonders bevorzugt m=20-23,
einem pH-Regulierungsmittel, gegebenenfalls einem Feuchthaltemittel, gegebenenfalls ein Haftungsmittel, gegebenenfalls ein Entschäumer und gegebenenfalls einem Biozid bestehen.

Die Pigmentpräparation kann eine mittlere Korngröße von 5 bis 5000 pm, vorzugsweise 10 bis 1000 pm, besonders bevorzugt 50 bis 500 pm, haben.

Die Pigmentpräparation kann eine Restfeuchte von 0,1 bis 20 Gew.-%, vorzugsweise 11 bis 20 Gew.-%, haben.

Die Pigmentpräparation kann 50 bis 99 Gew.-%, vorzugsweise 60 bis 90 Gew.-%, Pigment und 1 bis 50 Gew.-%, vorzugsweise 10 bis 40 Gew.-%, Verbindung der Formel I enthalten.

In einer besonders bevorzugten Ausführungsform der Erfindung kann die Pigmentpräparation aus mindestens einem Pigment, ausgewählt aus der Gruppe Gasruß, Pigment Yellow 74, Pigment Blue 15:3 und Pigment Red 122, mindestens einer Verbindung der allgemeinen Formel I

CH₃-(CH₂)ₙ-CH₂-O-[(CH₂)ₚ-O]ₘ-H I

mit n=8-18, vorzugsweise n=10-18, besonders bevorzugt n=14-18, ganz besonders bevorzugt n=14-16, p=1-4, vorzugsweise p=2, und m=15-25, vorzugsweise m=18-23, besonders bevorzugt m=20-23, und die Restfeuchte 0,1 bis 20 Gew.-% ist, einem pH-Regulierungsmittel, gegebenenfalls einem Feuchthaltemittel, gegebenenfalls ein Haftungsmittel, gegebenenfalls ein Entschäumer und gegebenenfalls einem Biozid bestehen.

Ein weiterer Gegenstand der Erfindung ist eine Pigmentpräparation, welche dadurch gekennzeichnet ist, dass diese eine Feststoffdifferenz vor und nach Lagerung von kleiner 0,1 Gew.-%, vorzugsweise kleiner 0,09 Gew.-%, besonders bevorzugt kleiner 0,06 Gew.-%, bei 2 Stunden Aufrührzeit und 24 Stunden Lagerzeit aufweist.

Die Feststoffdifferenz vor und nach Lagerung wird bestimmt indem man 5 g Granulat in einem 150 mL Becherglas hohe Form in 95 g VE-Wasser gibt und der pH-Wert mittels AMP 90 auf 8-9 angehoben wird. Mit einem Dreiecksmagnetrührer, Länge 3 cm, wird für 2 Stunden auf einer Magnetrührplatte RETbasic der Firma IKA bei 900 Upm gerührt. Anschliessend werden die Proben in 100 mL Mischzylinder umgefüllt und bei Markierung 90 mL eine 2,5 mL Probe mittels 3 mL PP-Pipette gezogen. Von dieser Probe wird mittels Satorius MA 100 der Feststoff gemessen:
Messparameter:
   Temperatur: 130 °C
   Einwaage: 2-4 g
   Abschaltbedingung: Masseverlust 1 mg pro 50 sek.

Nach 24 Stunden wird wiederum bei Markierung 90 mL eine 2,5 mL Probe gezogen und wiederum der Feststoff bestimmt.

Ein weiterer Gegenstand der Erfindung ist ein Verfahren zur Herstellung der Pigmentpräparation, welches dadurch gekennzeichnet ist, daß man mindestens ein Pigment und mindestens eine Verbindung der allgemeinen Formel I in mindestens einem Lösungsmittel dispergiert und anschließend trocknet.

Als Lösungsmittel können Wasser, Glykol, Glycerin, Alkohole oder Mischungen der vorgenannten Verbindungen eingesetzt werden.

Die Trocknung kann durch eine Gefrier- oder Sprühtrocknung oder ein anderes Granulierverfahren, beispielsweise Wirbelschichtgranulierung oder Fließbetttrocknung, erfolgen.

Für die Herstellung der Pigmentpräparation kann man für die Dispergierung Perlmühlen, Ultraschall, Dispax, Dissolver, Schüttelmischer, beispielsweise Scandex, Rotor-Stator-Dispergieraggregat, beispielsweise Ultra-Turrax, oder Homogenisator verwenden.

Das Gefrieren und Trocknen kann in einer Eiskondensatorkammer erfolgen. Die Einfriergeschwindigkeit kann zwischen 0,01 bis 10 °C/min, vorzugsweise zwischen 0,1 bis 3,0 °C/min, liegen.

Die Trocknung kann mit einem Sprühtrockner mit Düsenzerstäubung und Gleichstrom, Halbgegenstrom (Fontainenzerstäubung) und Gegenstromgasführung erfolgen. Als Sprühdüsen können Einstoffsprühdüsen, Zweistoffsprühdüsen oder Mehrkanalsprühdüsen verwendet werden.

Der Düsenvordruck kann 1-20 bar, vorzugsweise 10-20 bar, sein. Die Eingangstemperatur kann 150-220°C, vorzugsweise 160-200°C, betragen.

Die erfindungsgemäße Pigmentpräparation kann eingesetzt werden zur Einfärbung und/oder Antistatischausrüstung in wasserbasierenden Farben- und Lacksystemen, Dispersionsfarben, Druckfarben, Tintensystemen und Beschichtungssystemen.

Ein weiterer Gegenstand der Erfindung ist eine Tinte enthaltend mindestens eine erfindungsgemäße Pigmentparäparation.

Die erfindungsgemäßen Pigmentpräparationen weisen vorteilhafterweise eine bessere Aufrührbarkeit ("Stir in") als die bekannten Pigmentpräparationen auf.

### Beispiele

### Beispiel 1 (Sedimentationseigenschaften)

Die Zusammensetzungen der wäßrigen Rußdispersionen sind in der Tabelle 1 dargestellt.

**Tabelle 1**

| Inhaltsstoffe [Gew.-%] | Referenzdispersion | | | | Pigmentdispersion | | |
|---|---|---|---|---|---|---|---|
| | 1 | 2 | 3 | 4 | 1 | 2 | 3 |
| NIPex 160 IQ | 15,0 | 15,0 | 15,0 | 15,0 | 15,0 | 15,0 | 15,0 |
| Alkanol S 2 | 7,0 | | | | | | |
| Alkanol S 20 | | | | | 7,0 | | |
| Alkanol S 60 | | 7,0 | | | | | |
| Alkanol S 100 | | | 7,0 | | | | |
| Alkanol L 23P | | | | | | 7,0 | |
| Brij 58 | | | | | | | 7,0 |
| Brij 98 | | | | 7,0 | | | |
| AMP 90 | 0,2 | 0,2 | 0,2 | 0,2 | 0,2 | 0,2 | 0,2 |
| Wasser | 77,8 | 77,8 | 77,8 | 77,8 | 77,8 | 77,8 | 77,8 |

Alkanol S 2 ist eine Verbindung der allgemeinen Formel 1 mit p = 2, m = 2 und n = 16 der Firma Tego (Stoffgruppe: Fettalkoholethoxylate).
Alkanol S 20 ist eine Verbindung der allgemeinen Formel 1 mit p = 2, m = 20 und n = 16 der Firma Tego (Stoffgruppe: *Fettalkoholethoxylate*).
Alkanol S 60 ist eine Verbindung der allgemeinen Formel 1 mit p = 2, m = 60 und n = 16 der Firma Tego (Stoffgruppe: *Fettalkoholethoxylate*).
Alkanol S 100 ist eine Verbindung der allgemeinen Formel 1 mit p = 2, m = 100 und n = 16 der Firma Tego (Stoffgruppe: *Fettalkoholethoxylate*).
Alkanol L 23P ist eine Verbindung der allgemeinen Formel 1 mit p = 2, m = 23 und n = 10 der Firma Tego (Stoffgruppe: *Fettalkoholethoxylate*).
Brij 58 ist eine Verbindung der allgemeinen Formel 1 mit p = 2, m = 16 und n = 20 der Firma Aldrich (Stoffgruppe: *Fettalkoholethoxylate*).
Brij 98 ist eine Verbindung der Formel CH₃-(CH₂)₇-CH=CH-(CH₂)₇-CH₂-O-[(CH₂)₂-O]₂₀-H der Firma Aldrich (Stoffgruppe: *Fettalkoholethoxylate*).

Der Farbruß NIPex 160 IQ ist ein Gasruß mit einer mittleren Primärteilchengröße von 20 nm der Firma Degussa GmbH. AMP 90 ist ein 2-Amino-2-Methyl-Propanol der Firma Angus Chemie.

### 1. Vorbereitung der Netzmittellösung

Wasser vorlegen und Verbindung der allgemeinen Formel 1 beziehungsweise Brij 98 unter Erwärmen auf maximal 60°C lösen, nach dem Abkühlen mit AMP 90 alkalisch stellen.

### 2. Einarbeiten des Rußes

Farbruß NIPex 160 IQ in vorbereitetete Netzmittellösung unter langsamen Rühren (entweder von Hand oder mit langsamen Rührwerk) nach und nach einarbeiten.

### 3. Dispergierung

Die in Punkt 2 vorbereitete Dispersion wird mit einer Perlmühle dispergiert.

Die Pigmentdispersionen 1-3 sowie die Referenzdispersionen 2-4 ergeben nach dem Dispergieren dünnflüssige, homogene Dispersionen. Die Referenzdispersion 1 ist aufgrund der schlechten Wasserlöslichkeit von Alkanol S 2 nicht herstellbar.

### 4. Sprühtrocknung

Die Dispersionen werden anschliessend sprühgetrocknet (Büchi 190 Mini Spray Dryer). Die Dispersion wird mittels Schlauchpumpe zur Sprühdüse befördert und bei einer Eintrittstemeratur von 160°C getrocknet. Die Abscheidung erfolgt über einen Zyklon. Daraus resultieren die in der Tabelle 2 aufgeführten Pigmentpräparationen.

**Tabelle 2**

| Inhaltsstoffe [Gew.-%] | Referenzpräparation | | | | Erfindungsgemäße Pigmentpräparation | | |
|---|---|---|---|---|---|---|---|
| | 1 | 2 | 3 | 4 | 1 | 2 | 3 |
| NIPex 160 IQ | - | 66,8 | 66,6 | 66,8 | 67,0 | 66,6 | 66,9 |
| Alkanol S 2 | - | | | | | | |
| Alkanol S 20 | - | | | | 31,2 | | |
| Alkanol S 60 | - | 31,2 | | | | | |
| Alkanol S 100 | - | | 31,1 | | | | |
| Alkanol L 23P | - | | | | | 31,3 | |
| Brij 58 | - | | | | | | 31,4 |
| Brij 98 | - | | | 31,3 | | | |
| Restfeuchte | - | 2,0 | 2,3 | 1,9 | 1,8 | 2,1 | 1,7 |

Als Referenzpräparation 5 wird XFast Schwarz ED 7484, ein staubarmes, rieselfähiges "Stir in" Granulat, das sich direkt in wässrige Lackformulierungen einrühren lässt und Pigment Black 7 enthält, der Firma BASF eingesetzt.

Die Restfeuchte der Pigmentpräparationen wird an einer Probe mittels Infrarottrockner MA 100 der Firma Satorius ermittelt.
Messparameter:
Temperatur: 130 °C
Einwaage: 2-4 g
Abschaltbedingung: Masseverlust 1 mg pro 50 sek.

Die Korngröße der Pigmentpräparation wird an einer 250 mL Probe mittels Camsizer der Firma Retsch mit den folgenden Messparameter ermittelt:
Partikelmodell: Kugeln
Bildrate: 1:1
Rinne: 75mm

### Sedimentationsprofil:

Zur Untersuchung des Sedimentationsverhaltens der sprühgetrockneten Produkte werden in einem 150 mL Becherglas hohe Form je 5 g Granulat in 95 g VE-Wasser gegeben und der pH-Wert mittels AMP 90 auf 8-9 angehoben. Mit einem Dreiecksmagnetrührer, Länge 3 cm, wird auf einer Magnetrührplatte RETbasic der Firma IKA für 3 Stunden gerührt.

Anschliessend wird 1 g der erhaltenen Dispersion mit 19 g VE-Wasser verdünnt und ein Sedimentationsprofil mittels Lumifuge 116 Stability Analyser der Firma L.U.M. GmbH aufgenommen. Dabei wird die Transmission der Probe in Abhängigkeit der Zeit und des Ortes in einer Messküvette unter Zentrifugation gemessen.
Meßparameter:
1. 10 Meßprofile a 30 sek, n = 2000 Upm, Lichtfaktor 3
2. 200 Meßprofile a 120 sek, n = 2000 Upm, Lichtfaktor 3 Je geringer die Steigung der integralen Transmission, desto geringer ist die Sedimentationsgeschwindigkeit, desto stabiler ist die Dispersion und damit die Aufrührbarkeit der Pigmentpräparation.

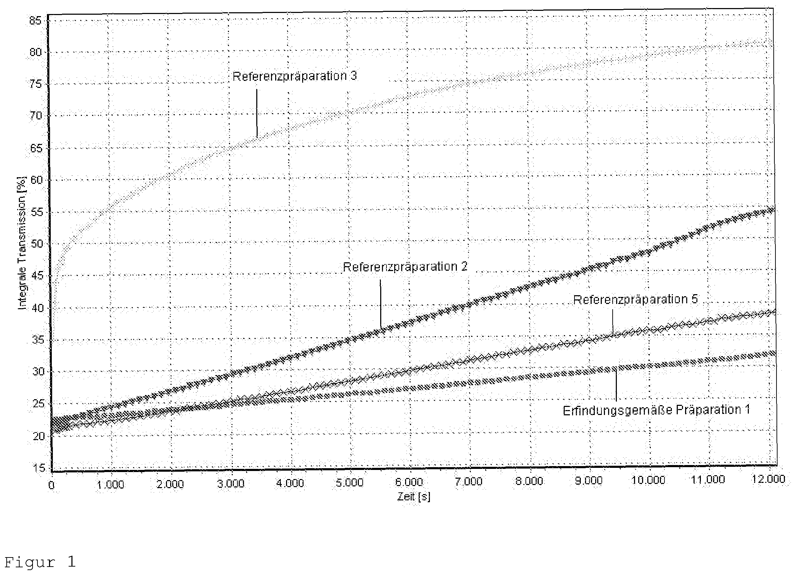

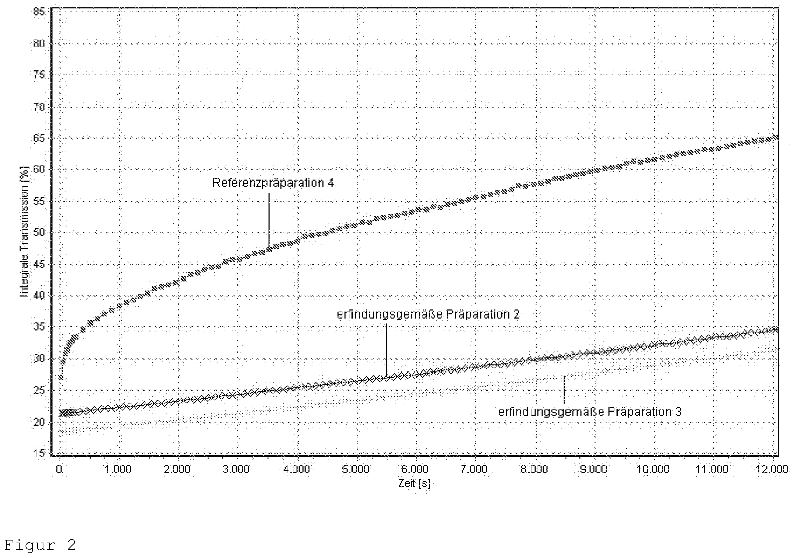

In Figur 1 und 2 sind die gemessenen Sedimentationsprofile dargestellt.

Die erfindungsgemäßen Pigmentpräparationen 1-3 zeigen eine deutlich niedrigere Sedimentationsgeschwindigkeit als die Referenzpräparationen 2-5. Diese Ergebnisse belegen eine deutlich bessere Aufrührbarkeit der erfindungsgemäßen Pigmentpräparationen 1-3.

### Beispiel 2 (Zeitabhängigkeit der Aufrührbarkeit)

Zur Untersuchung der Zeitabhängigkeit der Aufrührbarkeit der sprühgetrockneten Pigmentpräparation werden 5 g der erfindungsgemäßen Pigmentpräparation 1 in 95 g VE-Wasser gegeben, der pH - Wert mit AMP 90 auf 8 bis 9 eingestellt und mit einem Dreiecksmagnetrührer für 0,5, 1, 2 und 3 Stunden auf einer Magnetrührplatte RETbasic der Firma IKA gerührt.

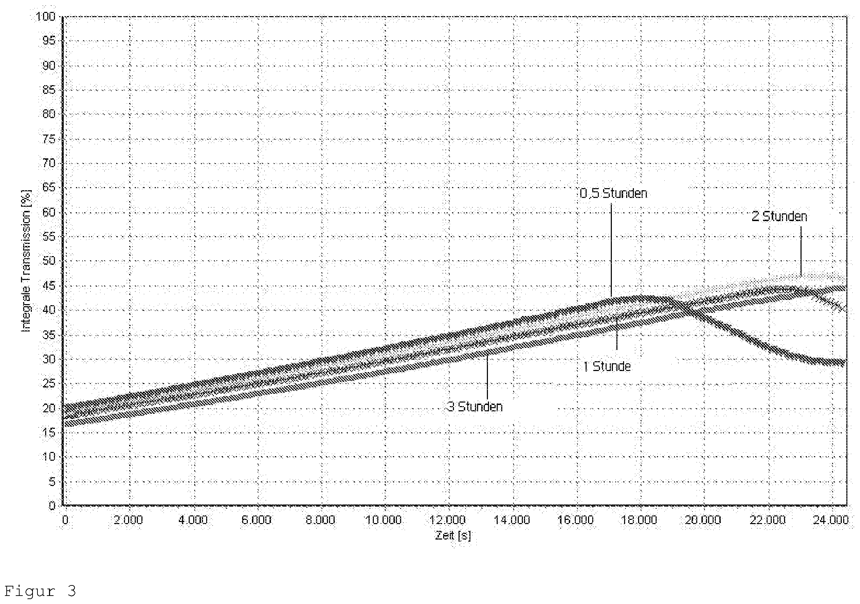

Anschliessend wird 1 g der erhaltenen Suspension mit 19 g VE-Wasser verdünnt und ein Sedimentationsprofil mittels Lumifuge 116 Stability Analyser der Firma L.U.M. GmbH aufgenommen.
Meßparameter:
1. 10 Meßprofile a 30 sek, n = 2000 Upm, Lichtfaktor 3
2. 200 Meßprofile a 120 sek, n = 2000 Upm, Lichtfaktor 3 Die Ergebnisse sind in Figur 3 dargestellt.

Die erfindungsgemäße Pigmentpräparation 1 zeigt nach 3 Stunden keinen Einbruch der Transmission, nach 3 Stunden Rühren mit dem Magnetrührer kann die Suspension als stabil betrachtet werden.

Zum Vergleich wird die Referenzpräparation 5 ebenso vermessen. Dazu werden 5 g des Referenzpräparation 5 in 95 g VE-Wasser gegeben, der pH - Wert mit AMP 90 auf 8 bis 9 angehoben und mit einem Magnetrührer für 0,5, 1, 2 und 3 Stunden gerührt.

Anschliessend wird 1 g der erhaltenen Suspension mit 19 g VE-Wasser verdünnt und ein Sedimentationsprofil mittels Lumifuge 116 Stability Analyser der Firma L.U.M. GmbH aufgenommen.
Meßparameter:
1. 10 Meßprofile a 30 sek, n = 2000 Upm, Lichtfaktor 3
2. 200 Meßprofile a 120 sek, n = 2000 Upm, Lichtfaktor 3.

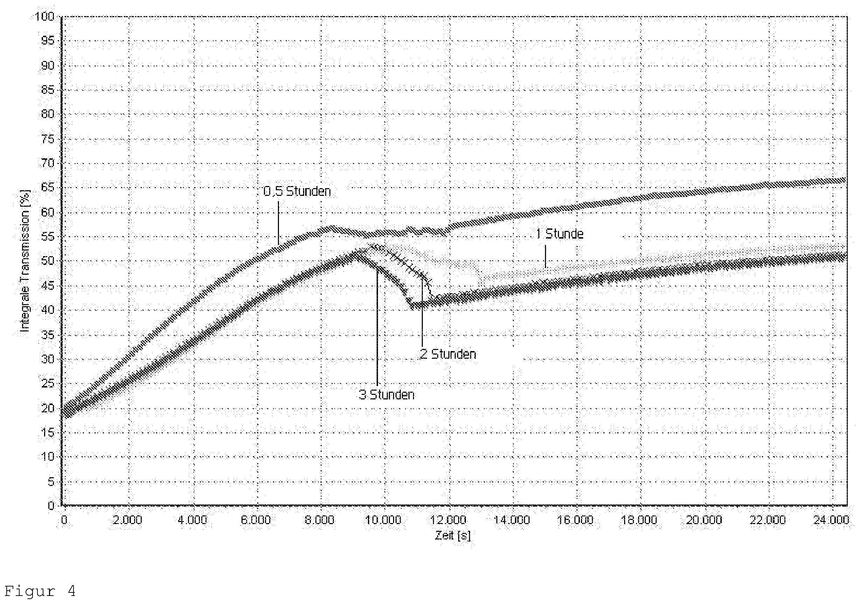

Die Ergebnisse sind in Figur 4 dargestellt.

Auch nach 3 Stunden Rühren stellt sich bei der Referenzpräparation 5 keine stabile Suspension ein.

### Beispiel 3 (Druckversuche der pigmentierten Tinten)

In den folgenden Beispielen werden auf Basis von erfindungsgemäßen Pigmentpräparationen Tinten für Inkjet - Drucker hergestellt und Druckversuche durchgeführt.

### 1. Vorbereitung der Netzmittellösung

Wasser vorlegen und Alkanol S 20 unter Erwärmen auf maximal 60°C lösen, nach dem Abkühlen wird mit AMP 90 der pH - Wert alkalisch eingestellt.

### 2. Einarbeiten des Pigmentes

Pigment in vorbereitetete Netzmittellösung unter langsamen Rühren (entweder von Hand oder mit langsamen Rührwerk) nach und nach einarbeiten.

### 3. Dispergierung

Die in Punkt 2 vorbereitete Dispersion wird mit einer Perlmühle dispergiert.

Die Zusammensetzungen der wäßrigen Pigmentdispersionen sind in der Tabelle 3 dargestellt.

**Tabelle 3**

| Inhaltsstoffe [Gew.-%] | Pigmentdispersion | | |
|---|---|---|---|
| | 4 | 5 | 6 |
| Pigment Yellow 74 | 15,0 | - | - |
| Pigment Blue 15:3 | - | 15,0 | - |
| Pigment Red 122 | - | - | 15,0 |
| Alkanol S20 | 7,0 | 7,0 | 7,0 |
| AMP 90 | 0,2 | 0,2 | 0,2 |
| Wasser | 77,8 | 77,8 | 77,8 |

Pigment Red 122 ist ein Magentapigment der Firma Sun unter der Handelsbezeichnung Sunfast Red 122.

Pigment Blue 15:3 ist ein Cyanpigment der Firma Clariant unter der Handelsbezeichnung Hostaperm Blau B2G.

Pigment Yellow 74 ist ein Gelbpigment der Firma Sun unter der Handelsbezeichnung Sunbrite Yellow 74.

### 4. Sprühtrocknung

Die Pigmentdispersion wird anschliessend sprühgetrocknet (Büchi 190 Mini Spray Dryer). Die Dispersion wird mittels Schlauchpumpe zur Sprühdüse befördert und bei einer Eintrittstemeratur von 160°C getrocknet. Die Abscheidung erfolgt über einen Zyklon. Daraus resultieren die in der Tabelle 4 aufgeführten Pigmentpräparationen.

**Tabelle 4**

| Inhaltsstoffe [Gew.%] | Erfindungsgemäße Pigmentpräparationen | | |
|---|---|---|---|
| | 4 | 5 | 6 |
| Pigment Yellow 74 | 67,0 | - | - |
| Pigment Blue 15:3 | - | 66,8 | - |
| Pigment Red 122 | - | - | 66,9 |
| Alkanol S 20 | 31,2 | 31,2 | 31,2 |
| Wasser | 1,8 | 2,0 | 1,9 |

Als Referenzpräparation 6 wird XFast Gelb ED 7574, ein staubarmes, rieselfähiges "Stir in" Granulat, das sich direkt in wässrige Lackformulierungen einrühren lässt und Pigment Yellow 184 enthält, der Firma BASF eingesetzt.

Als Referenzpräparation 7 wird XFast Magenta ED 7576, ein staubarmes, rieselfähiges "Stir in" Granulat, das sich direkt in wässrige Lackformulierungen einrühren lässt und Pigment Red 122 enthält, der Firma BASF eingesetzt.

Als Referenzpräparation 8 wird XFast Blau ED 7566, ein staubarmes, rieselfähiges "Stir in" Granulat, das sich direkt in wässrige Lackformulierungen einrühren lässt und Pigment Blue 15:2 enthält, der Firma BASF eingesetzt.

Zur Untersuchung der Eigenschaften der Pigmentpräparationen werden 5 g Granulat in einer Laborstandardtintenmischung eine Stunde mit einem Flügelrührer eingerührt. Anschließend wird lichtmikroskopisch der Dispergiergrad der Pigmentpräparationen beurteilt.

Tabelle 5 gibt einen Überblick über die hergestellten Tinten.

**Tabelle 5**

| Inhaltsstoffe [Gew.%] | Referenztinte | | | Erfindungsgemäße Tinte | | |
|---|---|---|---|---|---|---|
| | 1 | 2 | 3 | 1 | 2 | 3 |
| Referenzpräparation 6 | 5,0 | - | - | - | - | - |
| Referenzpräparation 7 | - | 5, 0 | - | - | - | - |
| Referenzpräparation 8 | - | - | 5, 0 | - | - | - |
| Erfindungsgemäße Pigmentpräparation 4 | - | - | - | 5, 0 | - | - |
| Erfindungsgemäße Pigmentpräparation 5 | - | - | - | - | 5,0 | - |
| Erfindungsgemäße Pigmentpräparation 6 | - | - | - | - | - | 5,0 |
| 2-Pyrrolidon | 3,0 | 3,0 | 3, 0 | 3,0 | 3,0 | 3,0 |
| Glycerin | 10,0 | 10,0 | 10,0 | 10,0 | 10,0 | 10,0 |
| 1,2 Hexandiol | 2,0 | 2,0 | 2,0 | 2,0 | 2,0 | 3,0 |
| Triethylenglycol | 12,0 | 12,0 | 12,0 | 12,0 | 12,0 | 12,0 |
| Surfynol 465 | 1,2 | 1,2 | 1,2 | 1,2 | 1,2 | 1,0 |
| Acticide MBS | 0,3 | 0,3 | 0,3 | 0,3 | 0,3 | 0,3 |
| DE Wasser | 66,5 | 66,5 | 66,5 | 66,5 | 66,5 | 65,7 |
| Lichtmikroskopische Beurteilung | 5 | 4 | 3 | 1 | 1 | 1 |

### Notenskala für lichtmikroskopische Beurteilung:

1 : keine Partikel größer 2 µm
2 : wenige Partikel größer 2 µm
3 : viele Partikel größer 2 µm
4 : viele Partikel größer 5 µm
5 : viele Partikel größer 10 µm

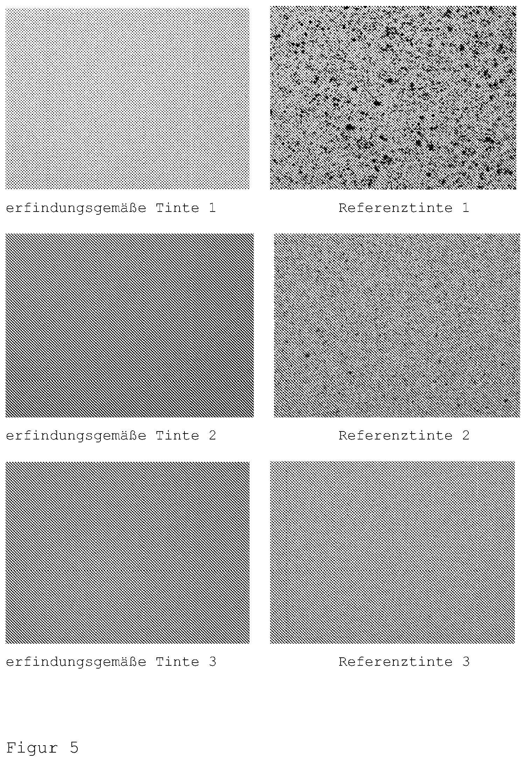

Figur 5 zeigt die lichtmikroskopischen Aufnahmen der Tinten bei 200-facher Vergrößerung.

Die erfindungsgemäßen Tinten 1, 2 und 3 zeigen ein deutlich besseres Aufrührverhalten als die Referenztinten 1, 2 und 3.

Aufgrund der lichtmikroskopischen Beurteilung werden die erfindungsgemäßen Tinten 1 bis 3 verdruckt, die Referenztinten 1 bis 3 können aufgrund der mangelnden Aufrührbarkeit nicht verdruckt werden.

Die erfindungsgemäßen Tinten werden über einen 500 nm Tiefenfilter filtriert und mit einem Großformatdrucker JV4 der Firma Mimaki verdruckt. Da die Referenztinten 1 bis 3 aufgrund der mangelnden Aufrührbarkeit nicht verdruckt werden könne, werden als Referenztinten die Original Mimaki Tinten verwendet. In der folgenden Tabelle 6 sind die ermittelten Werte zusammengefasst.

**Tabelle 6**

| | Referenztinte | | | Erfindungsgemäße Tinte | | |
|---|---|---|---|---|---|---|
| | 4 Mimaki (SPC-0180Y) | 5 Mimaki (SPC-0180C) | 6 Mimaki (SPC-0180M) | 1 | 2 | 3 |
| Viskosität [mPas] | 3,07 | 3,22 | 3,07 | 3,01 | 3,1 | 3,32 |
| Oberflächenspannung [mN/m] | 33,2 | 34,0 | 33,2 | 37,0 | 35,3 | 34,1 |
| pH - Wert | n.b. | n.b. | n.b. | 8,45 | 7,2 | 6,6 |
| Optische Dichte (Star Photo Ultrawhite Matt 150g/m²,Fa.Emblem) | 1,14 | 0,85 | 1,20 | 1,27 | 1,12 | 1,27 |
| Verdruckbarkeit | 1 | 1 | 1 | 1 | 1 | 1 |
| Refiretest 7 Tage | 1 | 1 | 1 | 1 | 1 | 1 |

| | | | | | | |
|---|---|---|---|---|---|---|
| n.b.: nicht bestimmbar | | | | | | |

### Bewertungsskala:

1 : sehr gut
5 : schlecht

### Bestimmung der Viskosität:

Das rheologische Verhalten wird in einem Rotationsversuch mit Schergeschwindigkeitsvorgabe (CSR) mit einem Physica Rheometer UDS 200 erfaßt. Bei einer Schergeschwindigkeit von 1000 S⁻¹ wird der Viskositätswert abgelesen.

### Bestimmung der Oberflächenspannung:

Mit dem Blasentensiometer BP2 der Firma Krüss wird die dynamische Oberflächenspannung ermittelt. Der Endwert wird bei 3000 ms abgelesen.

### Bestimmung des pH - Wertes:

Der pH - Wert wird an der unverdünnten Suspension unter Verwendung des pH-Meters CG 837 der Firma Scott bestimmt. Dazu wird die Glaselektrode in die Lösung getaucht und nach fünf Minuten der temperaturkorrigierte pH - Wert abgelesen.

### Bestimmung der optischen Dichte:

Die optische Dichte der Druckdemonstrationen werden mit einem Densitometer "Spectroeye" der Firma GretagMcBeth gemessen.

### Bestimmung der Verdruckbarkeit:

Die Druckversuche werden mit einem Mimaki JV4 Drucker durchgeführt. Dazu wird die Tinte mit einer Filterfeinheit von 500 nm filtriert und unter Vakuum entlüftet. Die fertige Tinte wird in eine gereinigte Original-Druckerpatrone eingefüllt und verdruckt. Die Druckdemos werden visuell im Hinblick auf Streifen (Düsenaussetzer), Druckschärfe und Intercolour Bleeding beurteilt.

### Bestimmung des Refire-Verhaltens:

In einem Refiretest wird das Anschreib - beziehungsweise Antrocknungsverhalten der Tinten nach 1, 3 und 7 Tagen Druckpause visuell beurteilt.

Die erfindungsgemäßen Tinten 1 bis 3 lassen sich sehr gut verdrucken und zeigen auch nach 7 Tagen Druckpause keine Aussetzer. Bei der Optischen Dichte liegen die Werte höher als bei den Referenztinten des Druckerherstellers.

### Beispiel 4 (Aufrührbarkeit)

In den folgenden Beispielen werden die Aufrührbarkeit (Stir in) der Präparationen näher dargestellt.

### Feststoffdifferenz vor und nach Lagerung:

Zur Untersuchung der Eigenschaften der sprühgetrockneten Produkte werden in einem 150 mL Becherglas hohe Form je 5 g Granulat in 95 g VE-Wasser gegeben und der pH-Wert mittels AMP 90 auf 8-9 angehoben. Mit einem Dreiecksmagnetrührer, Länge 3 cm, wird für 2 Stunden auf Magnetrührplatte RETbasic der Firma IKA bei 900 Upm gerührt. Anschliessend werden die Proben in 100 mL Mischzylinder umgefüllt und bei Markierung 90 mL eine 2,5 mL Probe mittels 3 mL PP-Pipette gezogen. Von dieser Probe wird mittels Satorius MA 100 der Feststoff gemessen:
Messparameter:
   Temperatur: 130 °C
   Einwaage: 2-4 g
   Abschaltbedingung: Masseverlust 1 mg pro 50 sek

Nach 24 Stunden wird wiederum bei Markierung 90 mL eine 2,5 mL Probe gezogen und wiederum der Feststoff bestimmt.

Als Referenzpräparation 9 wird XFast Gelb 1252, ein staubarmes, rieselfähiges "Stir in" Granulat, das sich direkt in wässrige Lackformulierungen einrühren lässt und Pigment Yellow 74 enthält, der Firma BASF eingesetzt.

Als Referenzpräparation 10 wird XFast Rot 3855, ein staubarmes, rieselfähiges "Stir in" Granulat, das sich direkt in wässrige Lackformulierungen einrühren lässt und Pigment Red 112 enthält, der Firma BASF eingesetzt.

Als Referenzpräparation 11 wird XFast Violett ED 7575, ein staubarmes, rieselfähiges "Stir in" Granulat, das sich direkt in wässrige Lackformulierungen einrühren lässt und Pigment Violett 23 enthält, der Firma BASF eingesetzt.

**Tabelle 7:**

| Probedispersion aus | Feststoff nach Rühren (vor Lagerung) in Gew.-% | Feststoff nach 24 h (nach Lagerung) in Gew.-% | Feststoffdifferenz vor und nach Lagerung in Gew.-% |
|---|---|---|---|
| Erfindungsgemäße Pigmentpräparation 1 | 4,82 | 4,78 | 0,04 |
| Erfindungsgemäße Pigmentpräparation 4 | 4,78 | 4,77 | 0,01 |
| Erfindungsgemäße Pigmentpräparation 5 | 5,01 | 4,93 | 0,08 |
| Erfindungsgemäße Pigmentpräparation 6 | 4,91 | 4,84 | 0,07 |
| Referenzpräparation 2 | 4,84 | 0,99 | 3,85 |
| Referenzpräparation 3 | 4,89 | 0,79 | 4,10 |
| Referenzpräparation 5 | 4,97 | 4,56 | 0,41 |
| Referenzpräparation 6 | 4,96 | 0,82 | 4,14 |
| Referenzpräparation 8 | 4,85 | 4,42 | 0,43 |
| Referenzpräparation 9 | 4,98 | 3,37 | 1,61 |
| Referenzpräparation 10 | 4,96 | 4,44 | 0,52 |
| Referenzpräparation 11 | 4,99 | 4,34 | 0,65 |

Die erfindungsgemäßen Pigmentpräparationen zeigen eine deutlich kleinere Feststoffdifferenz vor und nach Lagerung als die Referenzpräparationen und haben somit eine bessere Aufrührbarkeit (Tabelle 7).

## Patentansprüche

1. Pigmentpräparation, **dadurch gekennzeichnet, dass** diese mindestens ein Pigment und mindestens eine Verbindung der allgemeinen Formel I
CH₃-(CH₂)ₙ-CH₂-O-[(CH₂)ₚ-O]ₘ-H I
mit n=8-18, p=1-4 und m=15-25, enthält und die Restfeuchte 0,1 bis 20 Gew.-% ist.

2. Pigmentpräparation nach Anspruch 1,
**dadurch gekennzeichnet,**
**daß** das Pigment ein Buntpigment oder ein Ruß ist.

3. Pigmentpräparation nach Anspruch 1,
**dadurch gekennzeichnet,**
**daß** das Pigment ein Gasruß ist.

4. Pigmentpräparation nach Anspruch 1,
**dadurch gekennzeichnet,**
**daß** die Verbindung der allgemeinen Formel I CH₃-(CH₂)₁₀-CH₃-O-[(CH₂)₂-O]₁₈-H, CH₃-(CH₂)₁₂-CH₂-O-[(CH₂)₂-O]₁₈-H, CH₃-(CH₂)₁₄-CH₂-O-[(CH₂)₂-O]₁₈-H, CH₃-(CH₂)₁₆-CH₂-O-[(CH₂)₂-O]₁₈-H, CH₃-(CH₂)₁₀-CH₂-O-[(CH₂)₂-O]₂₀-H, CH₃-(CH₂)₁₂-CH₂-O-[(CH₂)₂-O]₂₀-H, CH₃-(CH₂)₁₄-CH₂-O-[(CH₂)₂-O]₂₀-H, CH₃-(CH₂)₁₆-CH₂-O-[(CH₂)₂-O]₂₀-H, CH₃-(CH₂)₁₀-CH₂-O-[(CH₂)₂-O]₂₃-H, CH₃-(CH₂)₁₂-CH₂-O-[(CH₂)₂-O]₂₃-H, CH₃-(CH₂)₁₄-CH₂-O-[(CH₂)₂-O]₂₃-H oder CH₃-(CH₂)₁₆-CH₂-O-[(CH₂)₂-O]₂₃-H ist.

5. Pigmentpräparation nach Anspruch 1, **dadurch**
**gekennzeichnet, dass** diese eine Feststoffdifferenz vor und nach Lagerung von kleiner 0,1 Gew.-% bei 2 Stunden Aufrührzeit und 24 Stunden Lagerzeit aufweist.

6. Verfahren zur Herstellung der Pigmentpräparation gemäß Anspruch 1 bis 5, **dadurch gekennzeichnet,**
**daß** man mindestens ein Pigment und mindestens eine Verbindung der allgemeinen Formel I in mindestens einem Lösungsmittel dispergiert und anschließend trocknet.

7. Verfahren zur Herstellung der Pigmentpräparation nach Anspruch 6, **dadurch gekennzeichnet,**
**daß** man die Pigmentpräparation sprühtrocknet oder gefriertrocknet.

8. Verwendung der Pigmentpräparation gemäß den Ansprüchen 1 bis 5, zur Einfärbung und/oder Antistatischausrüstung in wasserbasierenden Farben- und Lacksystemen, Dispersionsfarben, Druckfarben, Tintensystemen und Beschichtungssystemen.

9. Tinten, **dadurch gekennzeichnet, dass** diese mindestens eine Pigmentpräparation gemäß Anspruch 1-5 enthalten.

## Claims

1. Pigment preparation, **characterized in that** it contains at least one pigment and at least one compound of the general formula I
CH₃-(CH₂)ₙ-CH₂-O-[(CH₂)ₚ-O]ₘ-H I
where n = 8-18, p = 1-4 and m = 15-25 and the residual moisture content is in the range from 0.1% to 20% by weight.

2. Pigment preparation according to Claim 1, **characterized in that** the pigment is a color pigment or a carbon black.

3. Pigment preparation according to Claim 1, **characterized in that** the pigment is a gas black.

4. Pigment preparation according to Claim 1, **characterized in that** the compound of the general formula I is CH₃-(CH₂)₁₀-CH₂-O-[(CH₂)₂-O]₁₈-H, CH₃-(CH₂)₁₂-CH₂-O-[(CH₂)₂-O]₁₈-H, CH₃-(CH₂)₁₄-CH₂-O-[(CH₂)₂-O]₁₈-H, CH₃-(CH₂)₁₆-CH₂-O-[(CH₂)₂-O]₁₈-H, CH₃-(CH₂)₁₀-CH₂-O-[(CH₂)₂-O]₂₀-H, CH₃-(CH₂)₁₂-CH₂-O-[(CH₂)₂-O]₂₀-H, CH₃-(CH₂)₁₄-CH₂-O-[(CH₂)₂-O]₂₀-H, CH₃-(CH₂)₁₆-CH₂-O-[(CH₂)₂-O]₂₀-H, CH₃-(CH₂)₁₀-CH₂-O-[(CH₂)₂-O]₂₃-H, CH₃-(CH₂)₁₂-CH₂-O-[(CH₂)₂-O]₂₃-H, CH₃-(CH₂)₁₄-CH₂-O-[(CH₂)₂-O]₂₃-H, or CH₃-(CH₂)₁₆-CH₂-O-[(CH₂)₂-O]₂₃-H.

5. Pigment preparation according to Claim 1, **characterized in that** it has a solids difference of less than 0.1% by weight before and after storage for a stirring time of 2 hours and a storage time of 24 hours.

6. Process for producing the pigment preparation according to Claim 1 to 5, **characterized in that** at least one pigment and at least one compound of the general formula I are dispersed in at least one solvent and subsequently dried.

7. Process for producing the pigment preparation according to Claim 6, **characterized in that** the pigment preparation is spray dried or freeze dried.

8. Use of the pigment preparation according to Claims 1 to 5 for coloration and/or antistaticization in waterborne color and varnish systems, emulsion paints, printing inks, liquid-ink systems and coating systems.

9. Liquid inks, **characterized in that** they contain at least one pigment preparation according to Claim 1-5.

## Revendications

1. Préparation de pigment, **caractérisée en ce qu'**elle contient au moins un pigment et au moins un composé de formule générale I :
CH₃-(CH₂)ₙ-CH₂-O-[(CH₂)ₚ-O]ₘ-H I
dans laquelle l'indice n vaut de 8 à 18, l'indice p vaut de 1 à 4 et l'indice m vaut de 15 à 25,
et **en ce que** le taux d'humidité résiduelle vaut de 0,1 à 20 % en poids.

2. Préparation de pigment conforme à la revendication 1, **caractérisée en ce que** le pigment est un pigment de couleur ou un noir de fumée.

3. Préparation de pigment conforme à la revendication 1, **caractérisée en ce que** le pigment est un noir de gaz.

4. Préparation de pigment conforme à la revendication 1, **caractérisée en ce que** le composé de formule générale I est l'un de ceux de formules suivantes :
CH₃-(CH₂)₁₀-CH₂-O-[(CH₂)₂-O]₁₈-H,
CH₃-(CH₂)₁₂-CH₂-O-[(CH₂)₂-O]₁₈-H,
CH₃-(CH₂)₁₄-CH₂-O-[(CH₂)₂-O]₁₈-H,
CH₃-(CH₂)₁₆-CH₂-O-[(CH₂)₂-O]₁₈-H,
CH₃-(CH₂)₁₀-CH₂-O-[(CH₂)₂-O]₂₀-H,
CH₃-(CH₂)₁₂-CH₂-O-[(CH₂)₂-O]₂₀-H,
CH₃-(CH₂)₁₄-CH₂-O-[(CH₂)₂-O]₂₀-H,
CH₃-(CH₂)₁₆-CH₂-O-[(CH₂)₂-O]₂₀-H,
CH₃-(CH₂)₁₀-CH₂-O-[(CH₂)₂-O]₂₃-H,
CH₃-(CH₂)₁₂-CH₂-O-[(CH₂)₂-O]₂₃-H,
CH₃-(CH₂)₁₄-CH₂-O-[(CH₂)₂-O]₂₃-H,
ou CH₃-(CH₂)₁₆-CH₂-O-[(CH₂)₂-O]₂₃-H.

5. Préparation de pigment conforme à la revendication 1, **caractérisée en ce que** la différence de ses teneurs en matières solides avant et après repos, après 2 heures d'agitation et 24 heures de repos, vaut moins de 0,1 % en poids.

6. Procédé de production d'une préparation de pigment conforme à l'une des revendications 1 à 5, **caractérisé en ce qu'**on disperse, dans au moins un solvant, au moins un pigment et au moins un composé de formule générale I, et **en ce qu'**on sèche ensuite le tout.

7. Procédé de production d'une préparation de pigment, conforme à la revendication 6, **caractérisé en ce qu'**on sèche la préparation de pigment par pulvérisation ou par lyophilisation.

8. Utilisation d'une préparation de pigment conforme à l'une des revendications 1 à 5 pour la coloration et/ou l'apprêtage antistatique dans des systèmes de couleur et laque, couleurs en dispersion, couleurs d'imprimerie, systèmes d'encre et systèmes de revêtement, à base aqueuse.

9. Encres **caractérisées en ce qu'**elles contiennent au moins une préparation de pigment conforme à l'une des revendications 1 à 5.
